# EUROPEAN PATENT SPECIFICATION

(11) **EP 4 506 237 B1**
(45) Date of publication and mention of the grant of the patent: **31.12.2025**
(21) Application number: 24193008.0
(22) Date of filing: 06.08.2024
(51) Int. Cl.: B62J 45/414, B62J 45/413, B62J 45/42, B62K 23/04, B62J 11/13, B62J 40/10, B62K 11/04, B62K 25/28

(54) **INSTALLATION STRUCTURE OF ACCELERATOR POSITION SENSOR**
INSTALLATIONSSTRUKTUR FÜR EINEN BESCHLEUNIGERPOSITIONSSENSOR
STRUCTURE D'INSTALLATION DE CAPTEUR DE POSITION D'ACCÉLÉRATEUR

(30) Priority: 08.08.2023 JP 2023129581
(43) Date of publication of application: 12.02.2025
(73) Proprietor: Suzuki Motor Corporation, Shizuoka 432-8611 (JP)
(72) Inventor: YAMADA, Shinichi, Shizuoka (JP); OHATA, Yusuke, Shizuoka (JP); FUKUI, Akihito, Shizuoka (JP)
(74) Representative: Haseltine Lake Kempner LLP

(56) References cited:
- JP-A- 2012 207 545
- JP-B2- 5 117 212
- JP-B2- H0 629 578
- US-A1- 2018 339 745

## Description

### TECHNICAL FIELD

The present invention relates to an installation structure of an accelerator position sensor in a straddle-type vehicle.

### BACKGROUND ART

In the related art, as an accelerator position sensor of a straddle-type vehicle, one integrally attached to an accelerator grip is known (for example, see Patent Literature 1). The accelerator position sensor described in Patent Literature 1 is not mechanically connected to a throttle valve by a wire or the like, and an operation amount of the accelerator grip detected by the accelerator position sensor is sent to an electronic control unit. The electronic control unit determines a throttle opening degree based on the operation amount of the accelerator grip or the like, and an instruction is sent from the electronic control unit to a throttle motor to open and close the throttle valve.

### CITATION LIST

### PATENT LITERATURE

Patent Literature 1: JP2004-339945A

JP 2012 207545 A discloses a straddle-type vehicle according to the preamble of claim 1.

### SUMMARY OF INVENTION

The invention is set out in the appended set of claims.

### BRIEF DESCRIPTION OF DRAWINGS

FIG. 1 is a right side view of a straddle-type vehicle according to the present embodiment.
FIG. 2 is a right side view of a vehicle body central portion according to the present embodiment.
FIG. 3 is a left side view of the vehicle body central portion according to the present embodiment.
FIG. 4 is a perspective view of an accelerator position sensor according to the present embodiment.
FIG. 5 is a top view of the vehicle body central portion according to the present embodiment.

### DESCRIPTION OF EMBODIMENTS

In the case where the accelerator grip and the accelerator position sensor are integrated with each other as in Patent Literature 1, the wire is not connected to the accelerator grip, and an operation feeling of the accelerator grip is impaired. In addition, water resistance, mud resistance, damage at the time of falling, and the like of the accelerator position sensor must be considered.

The invention provides an installation structure of an accelerator position sensor capable of improving a protection performance without impairing an operation feeling of an accelerator grip.

Since an accelerator position sensor according to the invention is connected to an accelerator grip via an accelerator cable, an operation feeling of the accelerator grip is not impaired. A seat is supported from below by a pair of seat rails, and an air cleaner case is installed below the pair of seat rails. An outlet tube extends forward from the air cleaner case, and an upper surface of the outlet tube is formed lower than an upper surface of the air cleaner case. The accelerator position sensor is installed above the outlet tube between the pair of seat rails. By installing the accelerator position sensor between the pair of seat rails, the accelerator position sensor is protected by the seat rails from an impact when the vehicle falls down. By installing the accelerator position sensor using a space formed by a step between the air cleaner case and the outlet tube, a decrease in a capacity of an air cleaner is prevented. Further, the pair of seat rails and the outlet tube protect the accelerator position sensor from water droplets and mud from a lateral side and a lower side.

### Embodiment of the invention

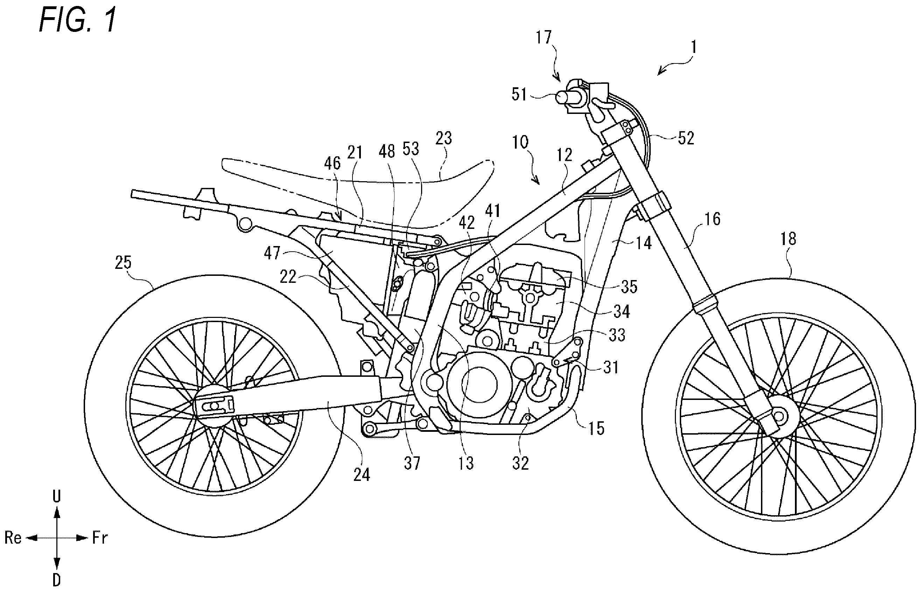

Hereinafter, a straddle-type vehicle according to the present embodiment will be described with reference to the accompanying drawings. FIG. 1 is a right side view of the straddle-type vehicle according to the present embodiment. In the following drawings, an arrow Fr indicates a vehicle front side, an arrow Re indicates a vehicle rear side, an arrow L indicates a vehicle left side, an arrow R indicates a vehicle right side, an arrow U indicates a vehicle upper side, and an arrow D indicates a vehicle lower side.

As shown in FIG. 1, a straddle-type vehicle 1 is configured by mounting various components such as an engine 31 and an electrical system on a vehicle body frame 10. A pair of main frames 12 extend diagonally rearward and downward from a head pipe of the vehicle body frame 10. Rear portions of the pair of main frames 12 form a pair of body frames 13 bent downward. A down frame 14 extends downward from the head pipe. A pair of under frames 15 bent rearward are connected to a lower portion of the down frame 14. Rear end portions of the pair of under frames 15 are connected to lower portions of the pair of body frames 13, and the vehicle body frame 10 has a cradle shape.

A front fork 16 is supported by the head pipe via a steering shaft (not shown) so as to be able to be steered. A handlebar 17 is provided on an upper portion of the front fork 16. A front wheel 18 is supported on a lower portion of the front fork 16 so as to be able to rotate. A pair of upper seat rails (seat rails) 21 extend rearward from upper portions of the pair of body frames 13. A pair of lower seat rails 22 extend diagonally rearward from lower portions of the pair of body frames 13. Rear portions of the pair of lower seat rails 22 are fixed to rear portions of the pair of upper seat rails 21. A seat 23 is supported by the pair of upper seat rails 21 from below. The pair of upper seat rails 21 are supported by the pair of lower seat rails 22 from below.

A swing arm 24 is supported by the body frames 13 so as to be able to swing. The swing arm 24 extends rearward from the body frames 13. A rear wheel 25 is supported at a rear end of the swing arm 24 so as to be able to rotate. A rear suspension 37 is installed near a front end of the swing arm 24. The swing arm 24, the rear suspension 37, and the body frame 13 are connected via a link mechanism. Since the rear suspension 37 extends and contracts in accordance with swinging of the swing arm 24, unevenness of a road surface is absorbed and vibration is prevented, and a ground contact property between the road surface and the rear wheel 25 is enhanced.

The engine 31 is a four-stroke single-cylinder engine. The engine 31 is suspended inside the vehicle body frame 10 via a plurality of suspension brackets. A cylinder assembly in which a cylinder 33, a cylinder head 34, and a cylinder head cover 35 are stacked is attached to an upper portion of a crankcase 32 of the engine 31. Intake system components such as an intake pipe 41, a throttle body 42, and an air cleaner 46 are connected to a rear side of the engine 31 (the cylinder head 34). The throttle body 42 is installed below the main frames 12. The air cleaner 46 is installed below the upper seat rails 21.

An electronically controlled throttle body 42 that is not mechanically connected to an accelerator grip 51 attached to the handlebar 17 is employed in the straddle-type vehicle 1 according to the present embodiment. In the electronically controlled throttle body 42, an accelerator position sensor 53 is connected to the accelerator grip 51 via an accelerator cable 52 in order to maintain an operation feeling of the accelerator grip 51. In other words, the accelerator position sensor 53 is mechanically connected to the accelerator grip 51 via the accelerator cable 52. An operation amount of the accelerator grip 51 is detected by the accelerator position sensor 53 via the accelerator cable 52. The throttle body 42 is electrically controlled based on the operation amount of the accelerator grip 51 and the like.

It is desirable that the accelerator position sensor 53 is installed inside the vehicle body frame 10 in order to protect the accelerator position sensor 53 from an impact when the vehicle falls down. When the accelerator position sensor 53 is installed in an installation space of the air cleaner 46 or a fuel tank (not shown), a capacity of the air cleaner 46 or the fuel tank needs to be reduced or a size of the vehicle needs to be increased. Further, it is necessary to protect the accelerator position sensor 53 from water droplets and mud splashing from a vehicle wheel. In the present embodiment, the accelerator position sensor 53 is installed in a space above the outlet tube 48 between the pair of seat rails 21.

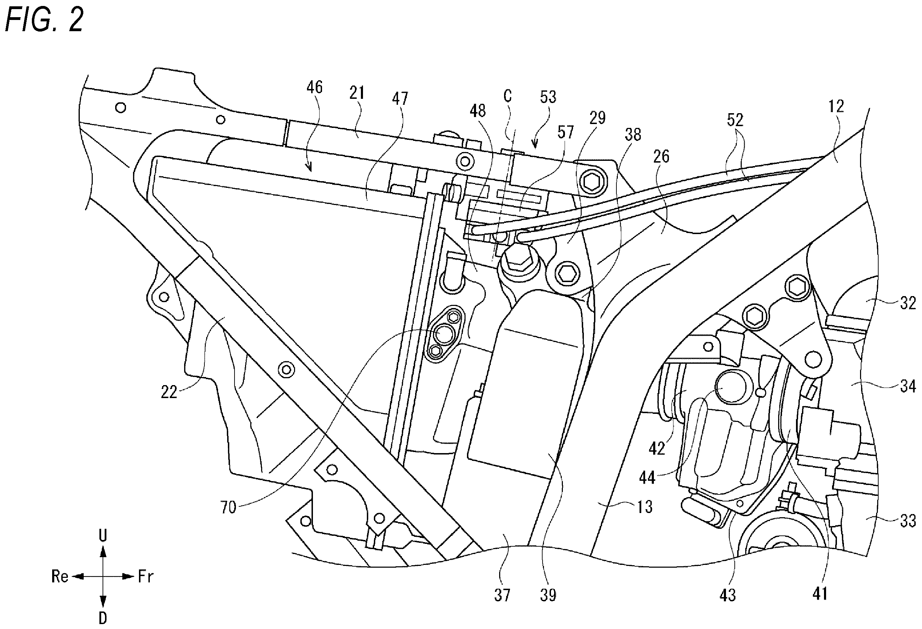

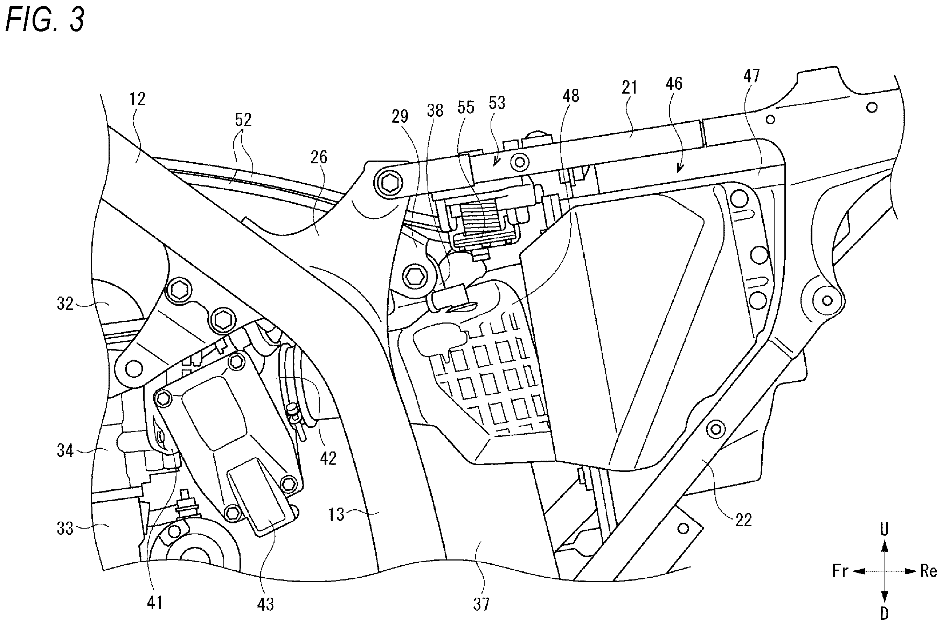

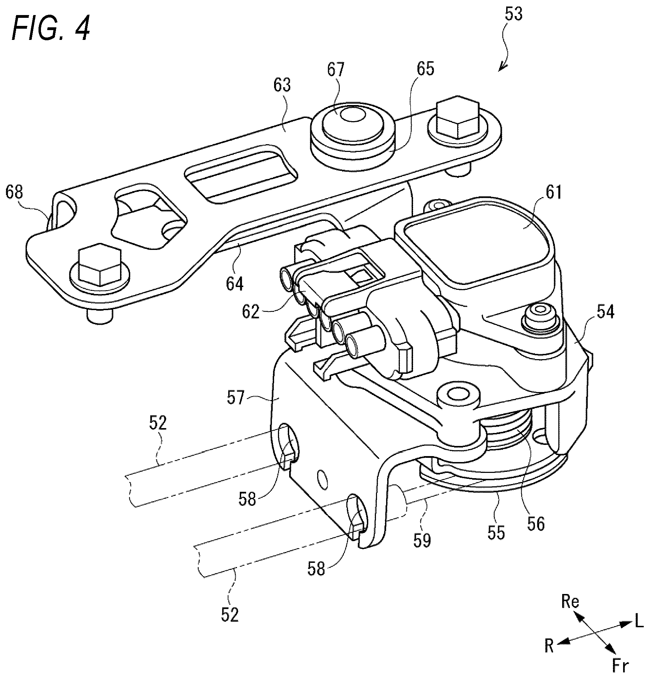

An installation structure of an accelerator position sensor will be described with reference to FIGS. 2 to 4. FIG. 2 is a right side view showing the vehicle body central portion according to the present embodiment. FIG. 3 is a left side view of the vehicle body central portion according to the present embodiment. FIG. 4 is a perspective view of the accelerator position sensor according to the present embodiment.

As shown in FIGS. 2 and 3, the air cleaner 46 is installed in a triangular space in a side view surrounded by the body frame 13, the upper seat rail 21, and the lower seat rail 22 in the vehicle body central portion. A dirty side of the air cleaner 46 is formed by an air cleaner case 47, and a clean side of the air cleaner 46 is formed by the outlet tube 48. The air cleaner case 47 has a box shape having a triangular shape in the side view. The air cleaner case 47 is installed below the pair of upper seat rails 21. The air cleaner case 47 is provided with a filter. Air taken into the air cleaner case 47 is filtered by the filter.

The outlet tube 48 is connected to a front surface of the air cleaner case 47. The outlet tube 48 extends forward from the air cleaner case 47. The outlet tube 48 is connected to a rear surface of the cylinder head 34 via the throttle body 42 and the intake pipe 41. An intake passage is formed by the outlet tube 48, the throttle body 42, and the intake pipe 41. After Air is sent from the outlet tube 48 to the throttle body 42, an intake air amount is adjusted by the throttle body 42. And then, air is supplied from the throttle body 42 to the cylinder head 34 through the intake pipe 41.

A throttle valve (not shown) is provided in the intake passage of the throttle body 42. An actuator 43 is provided on a lateral side of the throttle body 42. The actuator 43 is provided with a reduction gear train for transmitting a motor driving force to a valve shaft 44 of the throttle valve and an electronic board for motor control. The electronic board is accommodated inside a rectangular side surface cover of the actuator 43. The side surface cover is attached to the throttle body 42 so as to face a vehicle outer side. The motor driving force is transmitted to the valve shaft 44 by the actuator 43, and the throttle valve in the intake passage is opened and closed to adjust the intake air amount.

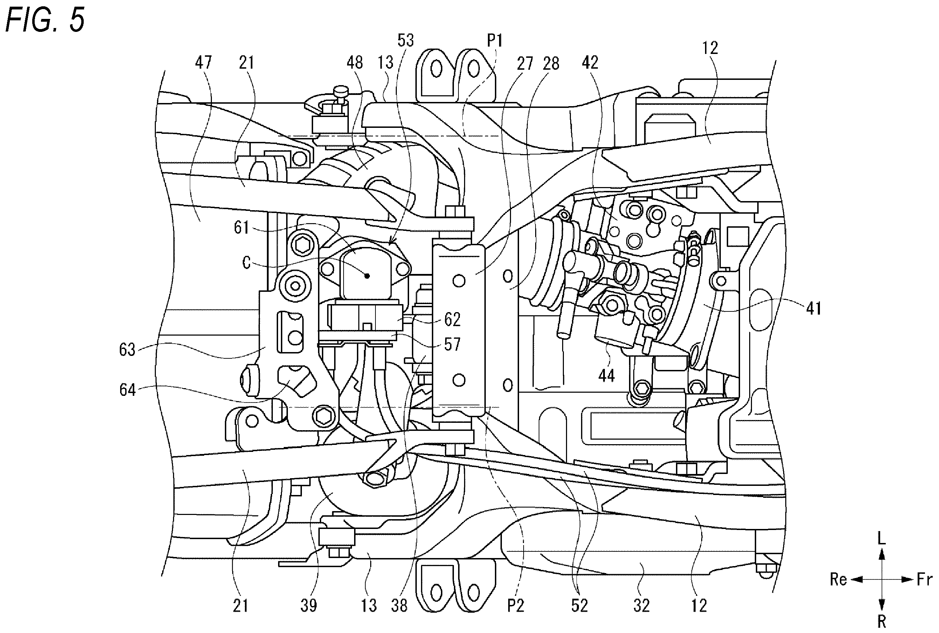

Upper portions of the pair of body frames 13 include protruding portions 26 which protrude diagonally rearward and upward. The protruding portions 26 are connected via frame bridges 27 and 28 (see FIG. 5). A bracket 29 is provided at a center portion in a vehicle width direction of the frame bridge 28 on a lower side. An upper end portion 38 of the rear suspension 37 is fixed to the bracket 29. The rear suspension 37 is installed in front of the air cleaner case 47. The outlet tube 48 extends forward from the air cleaner case 47 through a left side (one side in the vehicle width direction) of the rear suspension 37. A reservoir tank 39 is provided on a right side (the other side in the vehicle width direction) of the rear suspension 37.

An intake air temperature sensor 70 is installed on a right side surface (a side surface on the other side in the vehicle width direction) of the outlet tube 48. An intake air temperature in the outlet tube 48 is detected by the intake air temperature sensor 70. The intake air temperature sensor 70 is positioned between a front surface of the air cleaner case 47 and the reservoir tank 39 in the side view. By installing the intake air temperature sensor 70 on the right side surface of the outlet tube 48, a space above the outlet tube 48 can be used as a space of other components. Further, since the outlet tube 48 is curved so as to pass through a left side of the rear suspension 37, the intake air temperature sensor 70 on the right side surface of the outlet tube 48 is less likely to protrude to the vehicle outer side, and is protected from water droplets, mud, an impact, and the like.

An upper surface of the outlet tube 48 is lower than an upper surface of the air cleaner case 47. The accelerator position sensor 53 is installed in the space above the outlet tube 48. The accelerator position sensor 53 is installed above the outlet tube 48 between the pair of upper seat rails 21. The pair of upper seat rails 21 and the outlet tube 48 cover the accelerator position sensor 53 from the lateral side and the lower side, thereby protecting the accelerator position sensor 53 from water droplets, mud, an impact, and the like. The accelerator cable 52 is connected to the accelerator position sensor 53.

As shown in FIG. 4, a rotation shaft (not shown) is supported in a sensor case 54 of the accelerator position sensor 53 so as to be able to rotate. The rotation shaft protrudes from a lower surface of the sensor case 54. A pulley 55 is provided at a lower end portion of the rotation shaft. A wire 59 of an accelerator cable 52 extending from the accelerator grip 51 (see FIG. 1) is wound around the pulley 55. The pulley 55 and the rotation shaft are integrally rotated via the accelerator cable 52 by an operation of the accelerator grip 51. A coiled return spring 56 is mounted on the rotation shaft. The pulley 55 is pressed in a closing direction of the accelerator grip 51 by a spring force of the return spring 56.

A cable guide 57 is provided on a lower surface of the sensor case 54. The accelerator cable 52 is mounted to a pair of guide holes 58 of the cable guide 57. A sensor unit 61 (a sensor element) is provided on an upper surface of the sensor case 54. An upper end portion of the rotation shaft is connected to the sensor unit 61. The sensor unit 61 detects the operation amount of the accelerator grip 51 from a rotation amount of the pulley 55 that rotates integrally with the rotation shaft. The sensor unit 61 is provided with a coupler 62. An electric cable (not shown) is connected to the coupler 62. The operation amount of the accelerator grip 51 is sent from the sensor unit 61 to an electronic control unit (not shown) through the electric cable.

The accelerator position sensor 53 is supported by the pair of upper seat rails 21 (see FIG. 5) via a seat bracket 63 and a sensor bracket 64. The seat bracket 63 includes a horizontal plate extending in the vehicle width direction and a vertical plate connected to one end side of the horizontal plate in the vehicle width direction. The seat bracket 63 is fixed to the pair of upper seat rails 21 at both end portions in the vehicle width direction of the horizontal plate of the seat bracket 63. The sensor bracket 64 includes a horizontal plate extending in the vehicle width direction and a pair of vertical plates connected to both end sides of the horizontal plate in the vehicle width direction. The horizontal plate of the seat bracket 63 overlaps the horizontal plate of the sensor bracket 64. The vertical plate of the seat bracket 63 overlaps the vertical plate on the one side of the sensor bracket 64.

The horizontal plate of the seat bracket 63 and the horizontal plate of the sensor bracket 64 are fixed by a bolt 67 via a rubber bush 65. The vertical plate of the seat bracket 63 and the vertical plate on the one side of the sensor bracket 64 are fixed by a bolt 68 via a rubber bush (not shown). The sensor case 54 is fixed to the vertical plate on the other side of the sensor bracket 64. Since the sensor bracket 64 is floatingly supported by the seat bracket 63 via the rubber bush 65, vibration transmitted from the pair of upper seat rails 21 to the accelerator position sensor 53 is effectively absorbed by the rubber bush 65.

Layout of the accelerator position sensor will be described in detail with reference to FIGS. 2 and 5. FIG. 5 is a top view of the vehicle body central portion according to the present embodiment.

As shown in FIGS. 2 and 5, the accelerator position sensor 53 is installed between the pair of upper seat rails 21 by utilizing a step between the air cleaner case 47 and the outlet tube 48. The accelerator position sensor 53 is positioned inside both end positions P1 and P2 of the outlet tube 48 in the vehicle width direction, and the accelerator position sensor 53 is effectively protected from water droplets, mud, and the like from below by the outlet tube 48. An axis C of the pulley 55 of the accelerator position sensor 53 is directed in an upper-lower direction, a height dimension of the accelerator position sensor 53 is reduced, and a degree of freedom of arrangement of the accelerator position sensor 53 above the outlet tube 48 is increased.

In the side view, the sensor unit 61 of the accelerator position sensor 53 is covered with the upper seat rail 21 from the lateral side, and the pulley 55 (see FIG. 3) of the accelerator position sensor 53 is positioned below the upper seat rail 21. An upper surface of the sensor unit 61 is positioned below an upper surface of the upper seat rail 21 and above the upper surface of the air cleaner case 47. Although the sensor unit 61 is a part which is weak to an impact, the sensor unit 61 is protected from an impact when the vehicle falls down by the upper seat rail 21. Since the pulley 55 protrudes downward from the upper seat rail 21, the accelerator cable 52 can be easily wound around the pulley 55.

The accelerator position sensor 53 is positioned between the front surface of the air cleaner case 47 and the upper end portion 38 of the rear suspension 37. The accelerator position sensor 53 is installed in a narrow space between the front surface of the air cleaner case 47 and the upper end portion 38 of the rear suspension 37, thereby preventing an influence on other components below the seat 23 (see FIG. 1). The upper end portion 38 of the rear suspension 37 is fixed to the frame bridge 28. The accelerator position sensor 53 is positioned behind the upper end portion 38 of the rear suspension 37. Therefore, maintainability of the rear suspension 37 is not impaired even when the accelerator position sensor 53 is installed.

The accelerator position sensor 53 is supported from the rear by the seat bracket 63 and the sensor bracket 64. The cable guide 57 of the accelerator position sensor 53 is directed rightward, and the accelerator cable 52 extends rightward from the cable guide 57. Since the accelerator cable 52 extends forward through a side opposite to the outlet tube 48 with respect to the rear suspension 37 in a top view, the accelerator cable 52 can be laid in a front-rear direction so as not to interfere with the intake system components. Similarly, the coupler 62 of the accelerator position sensor 53 is also directed rightward, and the electric cable (not shown) extends rightward from the coupler 62.

As described above, according to the installation structure of the accelerator position sensor 53 according to the present embodiment, the accelerator position sensor 53 is connected to the accelerator grip 51 via the accelerator cable 52, so that the operation feeling of the accelerator grip 51 is not impaired. Since the accelerator position sensor 53 is installed between the pair of upper seat rails 21, the accelerator position sensor 53 is protected by the upper seat rails 21 from an impact when the vehicle falls down. The accelerator position sensor 53 is installed using a space formed by a step between the air cleaner case 47 and the outlet tube 48, so that a decrease in the capacity of the air cleaner case 47 is prevented. Further, the pair of upper seat rails 21 and the outlet tube 48 protect the accelerator position sensor 53 from water droplets and mud from the lateral sides and the lower side.

In the present embodiment, the accelerator position sensor is supported by the pair of upper seat rails via the seat bracket and the sensor bracket, but a support structure of the accelerator position sensor is not particularly limited thereto. The accelerator position sensor may be supported by a frame bridge or an upper seat rail on one side.

In the present embodiment, the axis of the pulley of the accelerator position sensor is directed in the upper-lower direction, but a direction of the axis of the pulley of the accelerator position sensor is not particularly limited thereto. For example, the axis of the pulley of the accelerator position sensor may be directed in the vehicle width direction.

In the present embodiment, the upper end portion of the rear suspension is fixed to the frame bridge, but the upper end portion of the rear suspension may only needs to be fixed to the vehicle body frame.

In the present embodiment, the accelerator position sensor is positioned behind the upper end portion of the rear suspension, but the accelerator position sensor may be positioned above the upper end portion of the rear suspension.

The installation structure of an accelerator position sensor according to the present embodiment is not limited to the off-load type straddle-type vehicle described above, and may be adopted in other types of straddle-type vehicles. The straddle-type vehicle is not limited to a general vehicle in which a driver rides on a seat in a posture straddling the seat, and includes a scooter-type vehicle in which the driver rides on the seat without straddling the seat.

As described above, according to a first aspect, there is provided an installation structure of an accelerator position sensor (53) connected to an accelerator grip (51) via an accelerator cable (52) in a straddle-type vehicle, in which a seat (23) is supported from a lower side of the straddle-type vehicle by a pair of seat rails (upper seat rails 21), an air cleaner case (47) is installed below the pair of seat rails, an outlet tube (48) extends forward from the air cleaner case, an upper surface of the outlet tube is lower than an upper surface of the air cleaner case, and the accelerator position sensor is installed above the outlet tube between the pair of seat rails. According to this configuration, since the accelerator position sensor is connected to the accelerator grip via the accelerator cable, an operation feeling of the accelerator grip is not impaired. Further, since the accelerator position sensor is installed between the pair of seat rails, the accelerator position sensor is protected by the seat rails from an impact when the vehicle falls down. By installing the accelerator position sensor using a space formed by a step between the air cleaner case and the outlet tube, a decrease in a capacity of the air cleaner case is prevented. Further, the pair of seat rails and the outlet tube protect the accelerator position sensor from water droplets and mud from a lateral side and a lower side.

According to a second aspect, in the first aspect, the accelerator position sensor is positioned inside both end positions of the outlet tube in a vehicle width direction of the straddle-type vehicle. According to this configuration, the accelerator position sensor is effectively protected from water droplets, mud, and the like from below by the outlet tube.

According to a third aspect, in the first and second aspects, the accelerator position sensor includes a pulley (55) around which the accelerator cable is wound. According to a fourth aspect, in the first and second aspects, an axis of the pulley is directed in an upper-lower direction of the straddle-type vehicle. According to these configurations, a height dimension of the accelerator position sensor is reduced, and a degree of freedom of arrangement above the outlet tube can be increased.

According to a fifth aspect, in the third aspect, the accelerator position sensor includes a sensor unit (61) that detects an operation amount of the accelerator grip from a rotation amount of the pulley, the sensor unit is covered with the pair of seat rails in a side view of the straddle-type vehicle, and the pulley is positioned below the pair of seat rails. According to this configuration, the sensor unit which is weak to an impact is protected from an impact when the vehicle falls down by the pair of seat rails, and the accelerator cable is easily wound around the pulley.

According to a sixth aspect, in any one of the first to fifth aspects, a rear suspension (37) is installed in front of the air cleaner case, and the accelerator position sensor is positioned between a front surface of the air cleaner case and an upper end portion (38) of the rear suspension. According to this configuration, the accelerator position sensor is installed in a narrow space between the air cleaner case and the rear suspension, thereby preventing an influence on other components below the seat.

According to a seventh aspect, in the sixth aspect, the upper end portion of the rear suspension is fixed to a vehicle body frame (10), and the accelerator position sensor is positioned behind the upper end portion of the rear suspension. According to this configuration, maintainability of the rear suspension is not impaired even when the accelerator position sensor is installed.

According to a eighth aspect, in the sixth or seventh aspect, the accelerator cable extends forward through a side opposite to the outlet tube with respect to the rear suspension in a top view of the straddle-type vehicle. According to this configuration, the accelerator cable can be laid in a front-rear direction so as not to interfere with an intake system component.

According to nineth aspect, there is provided a straddle-type vehicle, including: a pair of seat rails; a seat supported from a lower side of the straddle-type vehicle by the pair of seat rails; an air cleaner case installed below the pair of seat rails; an outlet tube extending forward from the air cleaner case; and an accelerator position sensor connected to an accelerator grip via an accelerator cable and installed above the outlet tube between the pair of seat rails, in which an upper surface of the outlet tube is lower than an upper surface of the air cleaner case. According to this configuration, since the accelerator position sensor is connected to the accelerator grip via the accelerator cable, an operation feeling of the accelerator grip is not impaired. Further, since the accelerator position sensor is installed between the pair of seat rails, the accelerator position sensor is protected by the seat rails from an impact when the vehicle falls down. By installing the accelerator position sensor using a space formed by a step between the air cleaner case and the outlet tube, a decrease in a capacity of the air cleaner case is prevented. Further, the pair of seat rails and the outlet tube protect the accelerator position sensor from water droplets and mud from a lateral side and a lower side.

The scope of the invention is defined by the appended claims.

## Claims

1. A straddle-type vehicle (1), comprising:
a pair of seat rails (21);
a seat (23) supported from a lower side of the straddle-type vehicle (1) by the pair of seat rails (21);
an air cleaner case (47) installed below the pair of seat rails (21);
an outlet tube (48) extending forward from the air cleaner case (47); and
an accelerator position sensor (53) connected to an accelerator grip (51) via an accelerator cable (52), wherein
an upper surface of the outlet tube (48) is lower than an upper surface of the air cleaner case (47); **characterized in that**
the accelerator position sensor (53) is installed above the outlet tube between the pair of seat rails (21), and
the accelerator position sensor (53) is positioned inside both end positions of the outlet tube (48) in a vehicle width direction of the straddle-type vehicle (1).

2. The straddle-type vehicle (1) according to claim 1, wherein
the accelerator position sensor (53) includes a pulley around which the accelerator cable (52) is wound.

3. The straddle-type vehicle (1) according to claim 2, wherein
an axis of the pulley (55) is directed in an upper-lower direction of the straddle-type vehicle (1).

4. The straddle-type vehicle (1) according to claim 2 or 3, wherein
the accelerator position sensor (53) includes a sensor element (61) that detects an operation amount of the accelerator grip (51) from a rotation amount of the pulley (55),
the sensor element (61) is covered with the pair of seat rails in a side view of the straddle-type vehicle (1), and
the pulley (55) is positioned below the pair of seat rails.

5. The straddle-type vehicle (1) according to claim 1, wherein
a rear suspension (37) is installed in front of the air cleaner case (47), and
the accelerator position sensor (53) is positioned between a front surface of the air cleaner case (47) and an upper end portion of the rear suspension (37).

6. The straddle-type vehicle (1) according to claim 5, wherein
the upper end portion of the rear suspension is fixed to a vehicle body frame (10), and
the accelerator position sensor (53) is positioned behind the upper end portion of the rear suspension (37).

7. The straddle-type vehicle (1) according to claim 5, wherein
the accelerator cable (52) extends forward through a side opposite to the outlet tube (48) with respect to the rear suspension (37) in a top view of the straddle-type vehicle (1).

## Patentansprüche

1. Zweiradfahrzeug (1), umfassend:
ein Paar Sitzstreben (21);
einen Sitz (23), der von einer Unterseite des Zweiradfahrzeugs (1) durch das Paar Sitzstreben (21) getragen wird;
ein Luftfiltergehäuse (47), das unter dem Paar Sitzstreben (21) installiert ist;
ein Auslassrohr (48), das sich vom Luftfiltergehäuse (47) nach vorne erstreckt; und
einen Beschleunigerpositionssensor (53), der über einen Beschleunigerzug (52) mit einem Beschleunigergriff (51) verbunden ist, wobei
eine obere Fläche des Auslassrohrs (48) niedriger ist als eine obere Fläche des Luftfiltergehäuses (47); **dadurch gekennzeichnet, dass**
der Beschleunigerpositionssensor (53) oberhalb des Auslassrohrs zwischen dem Paar Sitzstreben (21) installiert ist, und
der Beschleunigerpositionssensor (53) innerhalb beider Endpositionen des Auslassrohrs (48) in Richtung der Fahrzeugbreite des Zweiradfahrzeugs (1) angeordnet ist.

2. Zweiradfahrzeug (1) nach Anspruch 1, wobei
der Beschleunigerpositionssensor (53) eine Umlenkrolle beinhaltet, um die der Beschleunigerzug (52) gewickelt ist.

3. Zweiradfahrzeug (1) nach Anspruch 2, wobei
eine Achse der Umlenkrolle (55) in vertikaler Richtung des Zweiradfahrzeugs (1) gerichtet ist.

4. Zweiradfahrzeug (1) nach Anspruch 2 oder 3, wobei
der Beschleunigerpositionssensor (53) ein Sensorelement (61) beinhaltet, das einen Betätigungsgrad des Beschleunigergriffs (51) aus einem Drehgrad der Umlenkrolle (55) erfasst,
das Sensorelement (61) in einer Seitenansicht des Zweiradfahrzeugs (1) vom Paar Sitzstreben überdeckt wird und
die Umlenkrolle (55) unterhalb des Paars Sitzstreben angeordnet ist.

5. Zweiradfahrzeug (1) nach Anspruch 1, wobei
eine Hinterradfederung (37) vor dem Luftfiltergehäuse (47) installiert ist, und
der Beschleunigerpositionssensor (53) zwischen einer vorderen Fläche des Luftfiltergehäuses (47) und einem oberen Endabschnitt der Hinterradfederung (37) angeordnet ist.

6. Zweiradfahrzeug (1) nach Anspruch 5, wobei
der obere Endabschnitt der Hinterradfederung an einem Fahrzeugkarosserierahmen (10) befestigt ist und
der Beschleunigerpositionssensor (53) hinter dem oberen Endabschnitt der Hinterradfederung (37) angeordnet ist.

7. Zweiradfahrzeug (1) nach Anspruch 5, wobei
der Beschleunigerzug (52) sich in einer Draufsicht auf das Zweiradfahrzeug (1) durch eine dem Auslassrohr (48) gegenüberliegende Seite in Bezug auf die Hinterradfederung (37) nach vorne erstreckt.

## Revendications

1. Véhicule de type à selle (1), comprenant :
une paire de rails de siège (21) ;
un siège (23) supporté depuis un côté inférieur du véhicule de type à selle (1) par la paire de rails de siège (21) ;
un boîtier de filtre à air (47) installé sous la paire de rails de siège (21) ;
un tube de sortie (48) s'étendant vers l'avant à partir du boîtier de filtre à air (47) ; et
un capteur de position d'accélérateur (53) connecté à une poignée d'accélérateur (51) par l'intermédiaire d'un câble d'accélérateur (52), dans lequel
une surface supérieure du tube de sortie (48) est inférieure à une surface supérieure du boîtier de filtre à air (47) ; **caractérisé en ce que**
le capteur de position d'accélérateur (53) est installé au-dessus du tube de sortie entre la paire de rails de siège (21), et
le capteur de position d'accélérateur (53) est positionné à l'intérieur des deux positions d'extrémité du tube de sortie (48) dans le sens de la largeur de véhicule du véhicule de type à selle (1).

2. Véhicule de type à selle (1) selon la revendication 1, dans lequel
le capteur de position d'accélérateur (53) comprend une poulie autour de laquelle est enroulé le câble d'accélérateur (52).

3. Véhicule de type à selle (1) selon la revendication 2, dans lequel
un axe de la poulie (55) est dirigé dans une direction verticale du véhicule de type à selle (1).

4. Véhicule de type à selle (1) selon la revendication 2 ou 3, dans lequel
le capteur de position d'accélérateur (53) comprend un élément de capteur (61) qui détecte une quantité d'actionnement de la poignée d'accélérateur (51) à partir d'une quantité de rotation de la poulie (55),
l'élément de capteur (61) est recouvert par la paire de rails de siège dans une vue latérale du véhicule de type à selle (1), et
la poulie (55) est positionnée au-dessous de la paire de rails de siège.

5. Véhicule de type à selle (1) selon la revendication 1, dans lequel
une suspension arrière (37) est installée devant le boîtier de filtre à air (47), et
le capteur de position d'accélérateur (53) est positionné entre une surface avant du boîtier de filtre à air (47) et une partie d'extrémité supérieure de la suspension arrière (37).

6. Véhicule de type à selle (1) selon la revendication 5, dans lequel
la partie d'extrémité supérieure de la suspension arrière est fixée à un châssis de carrosserie de véhicule (10), et
le capteur de position d'accélérateur (53) est positionné derrière la partie d'extrémité supérieure de la suspension arrière (37).

7. Véhicule de type à selle (1) selon la revendication 5, dans lequel
le câble d'accélérateur (52) s'étend vers l'avant à travers un côté opposé au tube de sortie (48) par rapport à la suspension arrière (37) dans une vue de dessus du véhicule de type à selle (1).
